# EUROPEAN PATENT APPLICATION

(11) **EP 1 310 412 A1**
(43) Date of publication of application: **14.05.2003**
(21) Application number: 02024965.2
(22) Date of filing: 07.11.2002
(51) Int. Cl.: B60T 7/22, B60T 7/04, B60T 13/74

(54) **Braking device for vehicles**

(30) Priority: 09.11.2001 KR 2001069692; 09.11.2001 KR 2001069693
(71) Applicant: Kia Motors Corporation, Seocho-gu, Seoul (KR)
(72) Inventor: Woo, Min Su, Gunpo-si, Gyeonggi-do (KR)
(74) Representative: Viering, Jentschura & Partner

(57) **Abstract**

The present invention relates to a braking device for vehicles capable of preventing any further accidents subsequent to a vehicle collision accident by operating a parking brake upon the collision accident. The braking device of the present invention comprises a collision sensing means 100 for sensing a vehicle collision and outputting a signal corresponding thereto, and an emergency braking means 200 for causing a foot parking brake 300 to perform a braking operation in response to the signal from the collision sensing means 100. Thus, the present invention has an advantage in that any additional accidents subsequent to the collision accident can be prevented by forcibly braking the vehicle upon the collision accident.

## Description

### BACKGROUND OF THE INVENTION

### 1. Field of the Invention

The present invention relates to a braking device for vehicles, and more particularly, to an emergency braking device for vehicles capable of preventing any further accidents subsequent to a vehicle collision accident by operating a parking brake upon the collision accident.

### 2. Description of the Prior Art

Generally, a braking device for vehicles includes a service brake and a parking brake.

The service brake is used to allows a driver to reduce the speed of a vehicle or halt the vehicle during its running, whereas the parking brake is used to keep the vehicle stationary so as not to move when the vehicle is parked.

In general, a service foot brake that a driver operates with his/her foot has been used for the service brake, whereas a foot parking brake operated with the driver's foot and a hand parking brake operated with a driver's hand has been used for the parking brake.

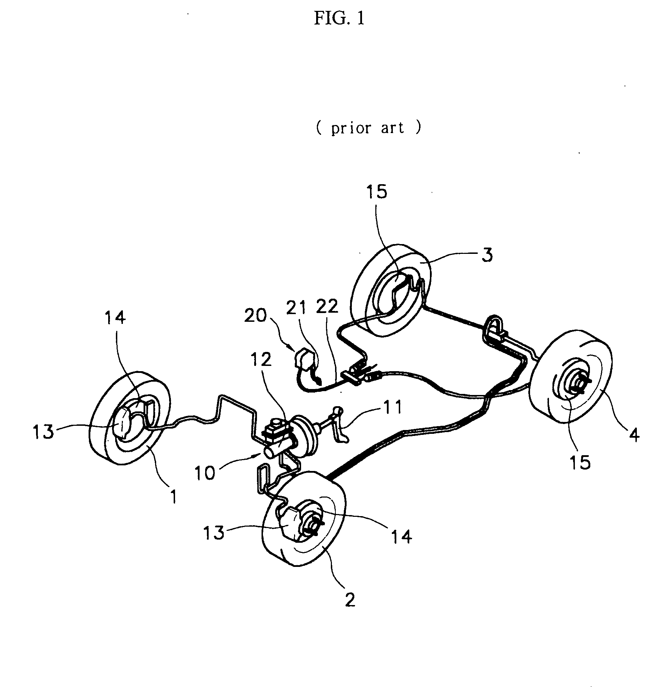

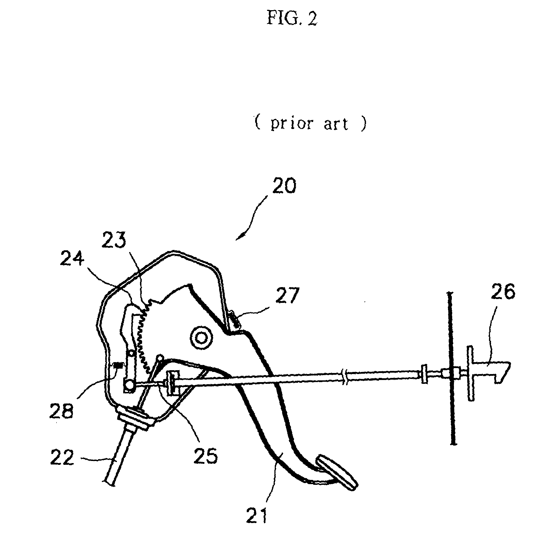

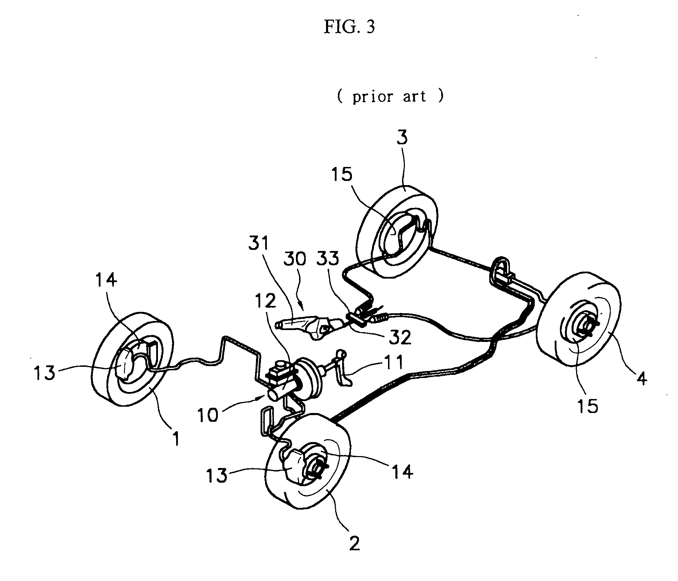

FIGS. 1 to 3 show conventional braking devices for the vehicles. In particular, FIG. 1 shows an example of the conventional braking device including the service foot brake and the foot parking brake, FIG. 2 shows the conventional service foot brake for vehicles, and FIG. 3 shows another example of the conventional braking device including the service foot brake and the hand parking brake.

Hereinafter, the conventional braking devices for the vehicles will be explained.

Referring to FIG. 1, hydraulic pressure is generated in a master cylinder 12 of the service foot brake 10 in response to a pedal force exerted on a brake pedal 11. Then, the hydraulic pressure generated in the master cylinder 12 is transmitted to pressure chambers in calipers 13 for braking front wheels 1, 2 and to wheel cylinders (not shown) for braking rear wheels 3, 4.

Since the hydraulic pressure is applied to the respective wheels 1, 2, 3, and 4 in such a manner, pads of the calipers 13 and linings of brake shoes (not shown) come into close contact with discs 14 and drums 15, respectively. Thus, the braking of the vehicle is accomplished.

FIG. 2 shows the foot parking brake of FIG. 1. The foot parking brake 20 comprises a parking brake pedal 21 with a sawtooth portion 23 formed over a predetermined range thereof and a hinged ratchet 24 engaged with the sawtooth portion 23 for intermittently controlling the operation of the parking brake pedal 21.

The ratchet 24 is operated by a release knob 26 connected thereto through a release cable 25.

First and second elastic members 27, 28 are provided to the parking brake pedal 21 and the ratchet 24, respectively, and thus, they provide the parking brake pedal 21 and the ratchet 24 with restoring forces so that the pedal 21 and the ratchet 24 can be returned to their original positions.

The foot parking brake 20 constructed as such causes a parking cable 22 to be pulled by a pedal force of the parking brake pedal 21 and brings the brake shoes into close contact with the drums 15 coupled to the rear wheels 3, 4, respectively. Thus, the vehicle can be kept stationary.

Upon release of the parking brake 20, the ratchet 24, which has been engaged with the sawtooth 23 so as to retain the pedal force exerted on the parking brake pedal 21, is released by pulling the release knob 26. Then, the parking brake pedal 21 is returned to its original position by means of the restoring force of the second elastic member 27 provided in the parking brake pedal 21, and thus, the parking cable 22 is loosened. Consequently, the stationary state of the vehicle is released.

FIG. 3 shows the braking device for the vehicles in which the hand parking brake is employed contrary to the braking device shown in FIG. 2. The hand parking brake will be hereinafter explained. In the figure, like reference numerals designate like elements shown in FIG. 1.

A hand parking brake 30 is provided with a parking cable 32 connected to a brake lever 31, and the parking cable 32 is also connected to an equalizer 33.

The equalizer 33 serves to equally distribute an operation force of the brake lever 31 to the right and left wheels.

When the brake lever 31 of the hand parking brake 30 constructed as such is pulled, the operation force of the brake lever 31 is exerted on the equalizer 33 by means of tension of the parking cable 32.

The equalizer 33 equally distributes and transmits the operation force of the brake lever 31 to the right and left rear wheels so as to bring the brake shoes into close contact with the drums 15 coupled to the rear wheels 3, 4, respectively. Thus, the vehicle can be kept stationary.

In order to release the parking brake 30, the brake lever 31 is first lowered in a state where a release button provided at the brake lever 31 is pressed, and the parking cable 32 is then loosened. Thus, the operation force of the brake lever 31 is transmitted to the equalizer 33, so that the brake shoes are separated from the drums 15 coupled to the rear wheels 3, 4, respectively. Consequently, the stationary state of the vehicle is released.

According to the conventional braking devices for the vehicles constructed as such, when the vehicle collision accident occurs, the hydraulic master cylinder and hydraulic piping system of the service brake may be damaged. Further, in a case where leakage of brake oil occurs, the braking operation cannot be accomplished after the collision accident. Furthermore, in a case where the driver is unconscious from the impact due to the collision accident, the vehicle cannot be properly braked.

That is, in a case where the vehicle loses the control of the braking force due to the collision accident at a slope, the vehicle may skid on the downward slope or fall down from a steep descent, which may lead to a fatal accident.

In a case where the vehicle loses the control of the braking force due to the collision accident at a flat road, the vehicle may skid toward the other lanes and collide against the other vehicles.

### SUMMARY OF THE INVENTION

The present invention is contemplated to solve the problems in the prior art. Accordingly, it is an object of the present invention to provide a braking device for vehicles capable of preventing any further accidents subsequent to a collision accident by forcibly braking a parking brake upon the collision accident.

The braking device for vehicles for achieving the object of the present invention comprises a collision sensing means for sensing a vehicle collision and outputting a signal corresponding thereto, and an emergency braking means for causing a parking brake to perform a braking operation in response to the signal from the collision sensing means.

The collision sensing means may further comprise a center G sensor unit for sensing impact acceleration, a front G sensor unit for sensing deceleration generated upon a low-speed collision, a safing sensor unit for outputting an impact response signal only when a vehicle is decelerated due to a forward vehicle collision, and a control unit for outputting a control signal in response to input signals from the center G sensor unit, the front G sensor unit and the safing sensor unit.

The emergency braking means may comprise a gas generator unit for generating high pressure gas in response to the signal from the collision sensing means, and a spindle for winding a parking cable, which is fastened to a parking brake pedal, by means of the high pressure gas generated from the gas generator unit.

Alternatively, the emergency braking means may comprise a driving unit which is operated in response to the output signal from the collision sensing means, a ratchet unit which is connected to a braking cable connected to an intermediary means for the parking brake operation force and is interlocked with the driving unit, and a locking unit for intermittently controlling a rotational operation of the ratchet unit.

### BRIEF DESCRIPTION OF THE DRAWINGS

The above and other objects, advantages and features of the present invention will become apparent from the following description of preferred embodiments given in conjunction with the accompanying drawings, in which:
FIG. 1 is a view showing an example of a conventional braking device for vehicles comprising a service foot brake and a foot parking brake;
FIG. 2 is a view showing a conventional foot parking brake for vehicles;
FIG. 3 is a view showing another example of a conventional braking device for vehicles comprising a service foot brake and a hand parking brake;
FIG. 4 is a view showing the entire configuration of a braking device for vehicles according to a first embodiment of the present invention;
FIG. 5 is a view showing an emergency braking means of the braking device for vehicles according to the first embodiment of the present invention;

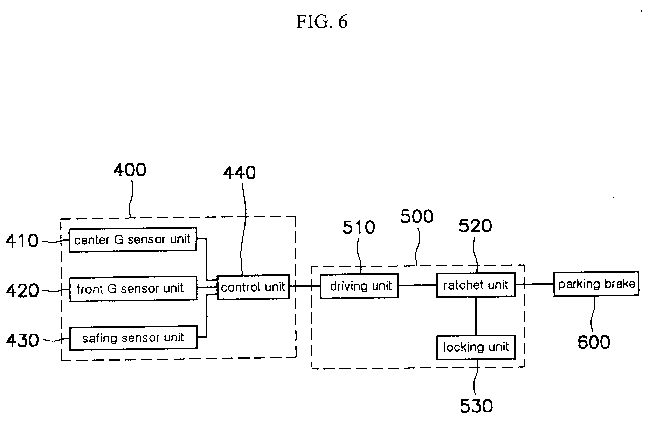

FIG. 6 is a view showing the entire configuration of a braking device for vehicles according to a second embodiment of the present invention; and
FIG. 7 is a view showing an emergency braking means of the braking device for vehicles according to a second embodiment of the present invention.

### DETAILED DESCRIPTION OF THE INVENTION

Hereinafter, preferred embodiments of the present invention will be explained in detail with reference to the accompanying drawings.

### First Embodiment

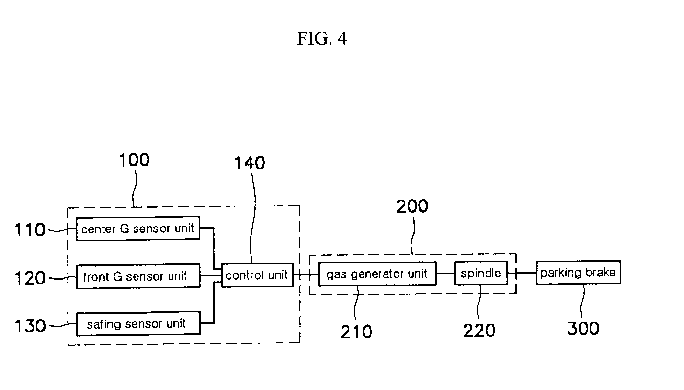

As shown in FIG. 4, a braking device for vehicles according to a first embodiment of the present invention comprises a collision sensing means 100 for sensing a vehicle collision and outputting a signal corresponding thereto, and an emergency braking means 200 for causing a foot parking brake 300 to perform a braking operation in response to the signal from the collision sensing means 100.

The collision sensing means 100 may include an impact sensor employed in an airbag system for protecting a driver or passenger upon the vehicle collision.

Specifically, the collision sensing means 100 comprises a center G sensor unit 100 for sensing impact acceleration, a front G sensor unit 120 for sensing deceleration generated upon a low-speed collision, a safing sensor 130 for outputting an impact response signal only when the vehicle is decelerated due to a forward vehicle collision, and a control unit 140 for outputting a control signal in response to input signals from the center G sensor unit 110, the front G sensor unit 120 and the safing sensor unit 130.

The center G sensor unit, the front G sensor unit and the safing sensor unit are accelerometers for sensing acceleration, and may include various types of accelerometers such as mechanical sensor, moving coil sensor, piezoelectric sensor, capacitive sensor and strain gauge sensor, which can be easily understood by those skilled in the art.

Preferably, the center G sensor unit 110 is constructed to have a semiconductor piezoresistor which is a gauge resistor formed by diffusing a p-type silicon layer onto an n-type silicon substrate, and generally installed at a central lower portion below an instrument panel. If a cantilever beam is subjected to deceleration and the beam is then bent due to its mass, the resistance of the gauge resistor is changed, and thus, the output of a resistive bridge circuit is changed. Accordingly, a reduction in the speed of a vehicle is sensed.

Preferably, the front G sensor unit 120 is a mechanical accelerometer with an eccentric rotary mass, comprises a rotor plate mounted with the eccentric mass, rotary and stationary contacts, a coil spring and the like, and is installed on the front right and left sides within an engine room. If deceleration G exceeding a deceleration threshold is applied thereto, the rotor plate starts to rotate so that both the contacts come into contact with each other. Thus, the speed of the vehicle is sensed.

Preferably, the safing sensor unit 130 is a mechanical type safing sensor which is in a normal "OFF" state and outputs an "ON" signal if the deceleration is applied thereto, and is a kind of accelerometer. The predetermined deceleration G is set to be lower than values of the center G sensor unit 110 and front G sensor unit 120 and is constructed to respond to only deceleration upon the forward vehicle collision. Thus, if the output of the safing sensor 130 is not accompanied even though the center G sensor unit 110 and front G sensor unit 120 output signals due to a certain cause rather than the collision, it is determined that the collision has not occurred. Therefore, an ignition signal is not outputted. Accordingly, an unnecessary operation of the emergency braking means is prevented.

The control unit 140 receives signals from the center G sensor unit 110, the front G sensor unit 120 and the safing sensor unit 130, and outputs a control signal for operating the emergency braking means 200.

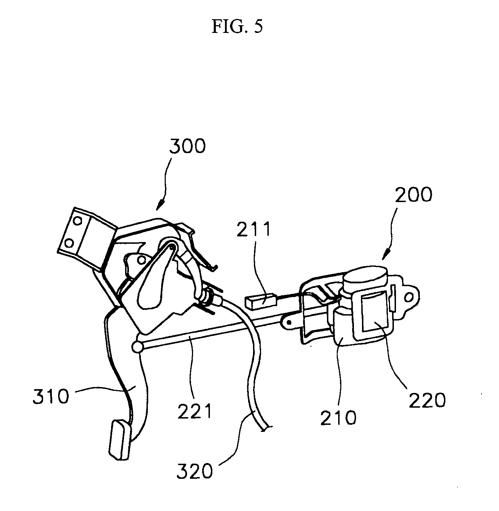

Referring to FIG. 5, the emergency braking means 200 comprises a gas generator unit 210 for generating high-pressure gas in response to the signal, and a spindle 220 for winding a braking cable 221, which is fastened to a parking brake pedal 310, by means of the high-pressure gas generated from the gas generator unit 210.

The gas generator unit 210 is provided with a connector 211 to be connected to the control unit 140 so that it can be operated in response to the control signal from the control unit 140.

Further, the gas generator unit 210 is provided with gunpowder that is ignited by the signal outputted from the control unit 140.

The operation of the braking device for vehicles according to the present invention constructed as such is as follows.

If a vehicle collision accident occurs while a vehicle is running, collision sensing signals are outputted from the center G sensor unit 110, front G sensor unit 120 and safing sensor unit 130, and then transmitted to the control unit 140.

The control unit 140 which has received the collision sensing signals outputs an ignition current for operating the gas generator unit 210 so as to ignite the gunpowder provided in the gas generator unit 210.

An explosion of the gunpowder results in the high-pressure gas within the gas generator unit 210, and the generated high-pressure gas functions as a driving force for rotatably driving the spindle 220.

The braking cable 221 is wound by the rotation of the spindle 220 and a pedal force is applied to the parking brake pedal 310 connected to the braking cable 221, so that a parking cable 320 is pulled.

When tension is exerted on the parking cable 320, brake shoes come into close contact with drums coupled to rear wheels and thus emergency braking is established, as described above in connection with the prior art.

### Second Embodiment

A braking device for vehicles according to a second embodiment of the present invention comprises a collision sensing means 400 for sensing a vehicle collision and outputting a signal corresponding thereto, and an emergency braking means 500 for causing a hand parking brake 600 to perform a braking operation in response to the signal from the collision sensing means 400.

The collision sensing means 400 is the impact sensor employed in the airbag system for protecting a driver or passenger upon a vehicle collision, of which detailed description will be omitted since it is identical with that of the first embodiment described above.

Reference numeral 410 designates the center G sensor unit, reference numeral 420 designates the front G sensor unit, reference numeral 430 designates the safing sensor unit, and reference numeral 440 designates the control unit.

The control unit 440 receives signals from the center G sensor unit 410, the front G sensor unit 420 and the safing sensor unit 430, and outputs a control signal for operating a driving unit 510 of the emergency braking means 500.

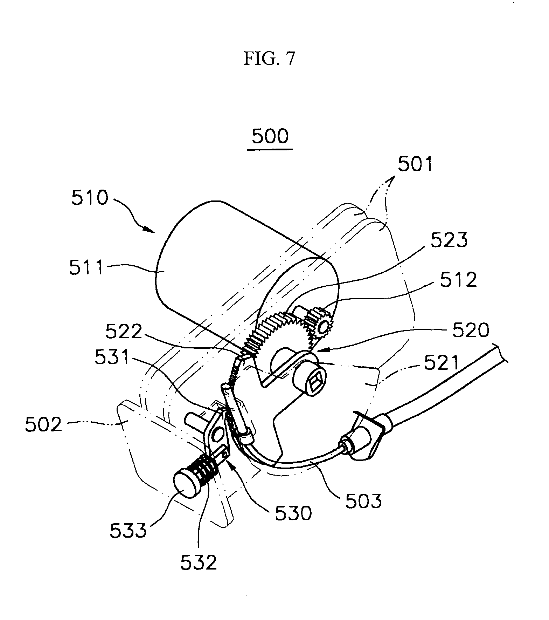

Referring to FIG. 7, the emergency braking means 500 comprises the driving unit 510 which is operated in response to the output signal from the collision sensing means, a ratchet unit 520 which is connected to a braking cable 503 and interlocked with the driving unit 510, and a locking unit 530 for intermittently controlling a rotational operation of the ratchet unit 520.

The driving unit 510 comprises a motor 511 provided with a first gear 512.

The ratchet unit 520 comprises a braking cable fixing member 521 to which the braking cable 503 is fixed, a ratchet 522 which is driven integrally with the braking cable fixing member 521 and formed with a plurality of teeth, and a second gear 523 which is engaged with the first gear 512 and driven integrally with the ratchet 522.

The locking unit 530 comprises a stopper 531 which has an end to be engaged with the teeth formed in the ratchet 522 and is hingedly fastened to a first bracket 501, and a pin 533 provided in a second bracket 502 in a state where a spring 532 is resiliently held around the pin so that the stopper 531 supports the ratchet 522 by means of an elastic force of the spring.

The first and second brackets 501, 502 are fixed to a frame of a vehicle body.

The braking cable 503 fixed to the braking cable fixing member 521 is connected to an intermediary means for the parking brake operation force which is provided in a general parking brake to mediate the braking operation force of the parking brake between the wheels.

The parking brake operation force intermediate means may include an equalizer for equally distributing the operation force of the brake lever to the right and left wheels, as described in detail in connection with the prior art.

The operation of the braking device for vehicles according to the present invention constructed as such is as follows.

If a vehicle collision accident occurs while a vehicle is running, collision sensing signals are outputted from the center G sensor unit 410, front G sensor unit 420 and safing sensor unit 430, and then transmitted to the control unit 440.

The control unit 440 that has received the collision sensing signals outputs the control signal to drive the motor 511.

The rotational driving force of the motor 511 is transmitted to the braking cable fixing member 521 and the ratchet 522 through the first gear 512 and the second gear 523 engaged with the first gear 512.

The ratchet unit 520 to which the braking cable 503 is fixed is rotated by the rotational driving force of the motor 511 so that the braking cable 503 is pulled. Thus, a braking force is produced by the parking brake and the emergency braking of the vehicle is established.

The locking unit 530 locks the ratchet 522 to prevent the braking cable 503 from loosening due to reverse rotation of the ratchet 522 while the parking brake is in operation.

As described above, since the braking device for vehicles according to the present invention comprises the collision sensing means, and the emergency braking means for forcibly operating the parking brake upon the vehicle collision, there is an advantage in that any additional accidents subsequent to the vehicle collision accident can be prevented by forcibly braking the vehicle upon the vehicle accident.

Although the present invention has been described in connection with the preferred embodiments with reference to the accompanying drawings, the preferred embodiments are intended not to limit the invention but to exemplify best modes of the present invention. It will be understood by those skilled in the art that various changes or modifications may be made thereto without departing from the spirit and scope of the invention. Therefore, the present invention is defined only by the appended claims which should be construed as covering such changes or modifications.

## Claims

1. A braking device for vehicles, comprising:
a collision sensing means for sensing a vehicle collision and outputting a signal corresponding thereto; and
an emergency braking means for causing a parking brake to perform a braking operation in response to the signal from the collision sensing means.

2. The braking device as claimed in claim 1, wherein the collision sensing means comprises a center G sensor unit for sensing impact acceleration, a front G sensor unit for sensing deceleration generated upon a low-speed collision, a safing sensor unit for outputting an impact response signal only when a vehicle is decelerated due to a forward vehicle collision, and a control unit for outputting a control signal in response to input signals from the center G sensor unit, the front G sensor unit and the safing sensor unit.

3. The braking device as claimed in claim 1, wherein the emergency braking means further comprises a gas generator unit for generating high pressure gas in response to the signal from the collision sensing means, and a spindle for winding a parking cable, which is fastened to a parking brake pedal, by means of the high pressure gas generated from the gas generator unit.

4. The braking device as claimed in claim 1, wherein the emergency braking means comprises a driving unit which is operated in response to the output signal from the collision sensing means, a ratchet unit which is connected to a braking cable connected to an intermediary means for the parking brake operation force and is interlocked with the driving unit, and a locking unit for intermittently controlling a rotational operation of the ratchet unit.
